# EUROPEAN PATENT APPLICATION

(11) **EP 0 861 996 A1**
(43) Date of publication of application: **02.09.1998**
(21) Application number: 97941263.2
(22) Date of filing: 29.09.1997
(51) Int. Cl.: F16H 25/12

(54) **DEVICE FOR CONVERTING ROTARY MOTION INTO LINEAR MOTION**

(30) Priority: 30.09.1996 JP 258857/96
(71) Applicant: HARMONIC DRIVE SYSTEMS INC., Shinagawaku, Tokyo 140 (JP)
(72) Inventor: KOYAMA, Junji, Harmonic Drive Systems Inc., Minamiazumi-gun, Nagano-ken 399-83 (JP)
(74) Representative: Klunker . Schmitt-Nilson . Hirsch
(86) International application number: JP9703453
(87) International publication number: WO9814721

(57) **Abstract**

A device (1) for converting a rotary motion into a linear motion which has three balls (6-1, 6-2, 6-3) held at equiangular positions on the same circle by a ball retainer (8) between a ball rolling surface (4a) formed in an annular fixed plate (4) and a ball pressing surface (3a) formed at the end of a linear motion shaft (3) that can be linearly reciprocated. These balls are retained in place by a coil spring (9). The ball retainer (8) rotates with a rotary input shaft (2). The ball rolling surface (4a) is formed with three undulated cam surfaces along the circumferential direction, so that as the balls (6) held in the ball retainer rotate with the rotary input shaft (2), the balls reciprocate in the direction of the axis line L causing the linear motion shaft (3) to perform a reciprocal linear motion in the direction of the axis line L. Compared with a conversion mechanism comprising a screw and a nut, this conversion device has a small dead band and can easily be reduced in size.

## Description

### Technical Field

This invention relates to a conversion device for converting a rotary motion into a linear motion.

### Background Art

As a mechanism for converting a rotary motion into a linear motion, one has generally been used that is provided with a combination of a screw and a nut, and similar mechanisms have also been used. In a conventional mechanism, for example, a ball thread is rotated by a motor or other means while a ball nut engaging with the thread is retained not to rotate, whereby rotation of the ball thread causes to occur a linear motion of the ball nut along its axis line. Thus, the ball nut can be moved reciprocally and nearly at a desired stroke by controlling direction and amount of rotation of the ball thread.

A generally used conversion device for converting a rotary motion into a liner motion must be provided with a rotation-preventing means for retaining one of the screw and nut not to rotate in order to convert a rotary motion into a liner motion. It also must be provided with a mechanical mechanism or control means for defining the stroke of a member that is moved reciprocally and linearly. Further, a retaining mechanism must be provided for supporting a rotary shaft formed with a screw.

Accordingly, it is generally difficult to reduce in size of the conversion mechanism provided with a combination of a screw and a nut for converting a rotary motion into a linear motion. If the mechanism is reduced in size, there will occur disadvantages including that a dead band thereof becomes large.

### Disclosure of Invention

In view of the above points, an object of this invention is to realize a conversion device for converting a rotary motion into a linear motion that can easily be reduced in size.

In order to solve the above object, a conversion device for converting a rotary motion into a linear motion according to this invention is characterized in that: it comprises a rotary shaft; a linear motion shaft capable of being moved reciprocally and linearly and arranged coaxially with the rotary shaft; a circular plate arranged concentrically with the rotary shaft; a ball rolling surface formed on a surface of the circular plate; a ball pressing surface formed on the linear motion shaft so as to face the ball pressing surface; a plurality of balls arranged between the ball rolling surface and the ball pressing surface; a spring member for resiliently pressing the ball pressing surface of the linear motion shaft toward the balls; a ball retainer for retaining the respective balls in place along a circumferential direction, wherein the ball rolling surface has a plurality of cam surfaces arranged concentrically along a circumferential direction, the respective balls are held rotatably at a position corresponding to the respective cam surfaces by means of the ball retainer, and one of the circular plate and the ball retainer for retaining the balls is rotated integrally with the rotary shaft.

Typically, the ball rolling surface is formed with at least three cam surfaces of the same pattern at equiangular positions, and at least three balls are arranged at equiangular positions in a manner that they can roll freely by means of the ball retainer which rotates integrally with the rotary shaft.

In the above-constituted conversion device for converting a rotary motion into a linear motion according to this invention, when the rotary shaft connected to a rotary source such as a motor, either the circular plate having the ball rolling surface or the ball retainer for retaining the balls is rotated integrally, whereby a relative rotary motion occurs between the balls and the ball rolling surface. Since the ball rolling surface is formed with the cam surfaces of the same patter arranged along the circumferential direction, the balls between the ball rolling surface and the ball pressing surface roll on the respective cam surfaces in accordance with the relative rotary motion. As a result, the balls are forced to move reciprocally along the direction of the axis line in responsive to undulation of the cam surface along the direction of the axis line, so that the linear motion shaft pressed against the balls by a spring force is moved linearly and reciprocally along the direction of the axis line together with the balls. Thus, the linear motion shaft repeats a linear reciprocal motion as the rotary input shaft rotates.

### Brief Description of Drawings

Figure 1 is a schematic longitudinal sectional view of a conversion device according to this invention.

Figure 2 is an explanatory view showing an arrangement of balls of Figure .

Figure 3 is an explanatory view of cam surfaces formed on a ball rolling surface of Figure 1 in section when expanded on a plane.

### Best Mode for Carrying Out the Invention

A conversion device for converting a rotary motion into a linear motion according to this invention will now be described with reference to the drawings.

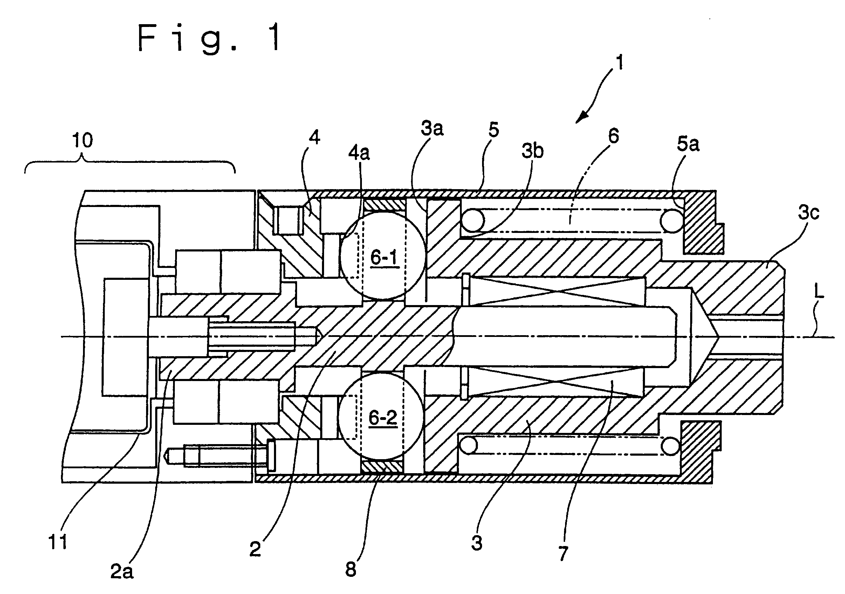

Figure 1 is a schematic longitudinal sectional view of a conversion device. A conversion device 1 has a rotary input shaft 2, and a linear motion shaft 3 which is arranged coaxially with the rotary input shaft 2 and is able to move linearly and reciprocally. The rotary input shaft 2 has an end 2a fixedly connected to an output shaft 11 of a reduction device 10. A flexed meshing type gear device can be adopted as the reduction device 10. In the shown example, the rotary input shaft 2 is connected to a cup-shaped flexible external gear 11 of the reduction device 10 of this type. Further, in this example, the linear motion shaft 3 is an annular hollow shaft that is arranged to enclose an end portion of the rotary input shaft 2.

Around an end 2a of the rotary input shaft 2 are concentrically arranged circular plate 4 which is fixedly connected to an end of an annular device housing 5. The surface of the circular plate 4 is a ball rolling surface as mentioned after.

The linear motion shaft 3 has an end facing the circular plate 4, the end being formed with a circular ball pressing surface 3a of the same size as the circular plate 4. Between the circular plate 4 and the ball pressing surface 3a, there are arranged a plurality of balls, in this example, three balls 6-1, 6-2 and 6-3 as explained hereinafter.

A coil spring 6 is placed in a compressed condition between a circular surface 3b at the back side of the ball pressing surface 3a of the linear motion shaft 3 and a circular inner side surface 5a of the device housing 5. The linear motion shaft 3 is supported on an inner circumferential surface 5b of the device housing 5 in a manner that it can be slid freely along the direction of an axis line L, and an end portion of the rotary input shaft 2 inserted into the hollow portion of the linear motion shaft 3 is supported rotatably by means of a linear bushing 7. Thus, the linear motion shaft 3 slides freely in the direction of the axis line L, and therefore, it is usually pressed toward the balls 6-1, 6-2 and 6-3 by means of the coil spring 6. In other words, the ball pressing surface 3a of the linear motion shaft 3 is held in contact with the balls 6-1, 6-2 and 6-3.

In this example, the three balls 6 are held rotatably on their centers at equiangular positions of 120 degrees so that they are rotate with the rotary input shaft 2 by means of a ball retainer 8 mounted on the rotary input shaft 8.

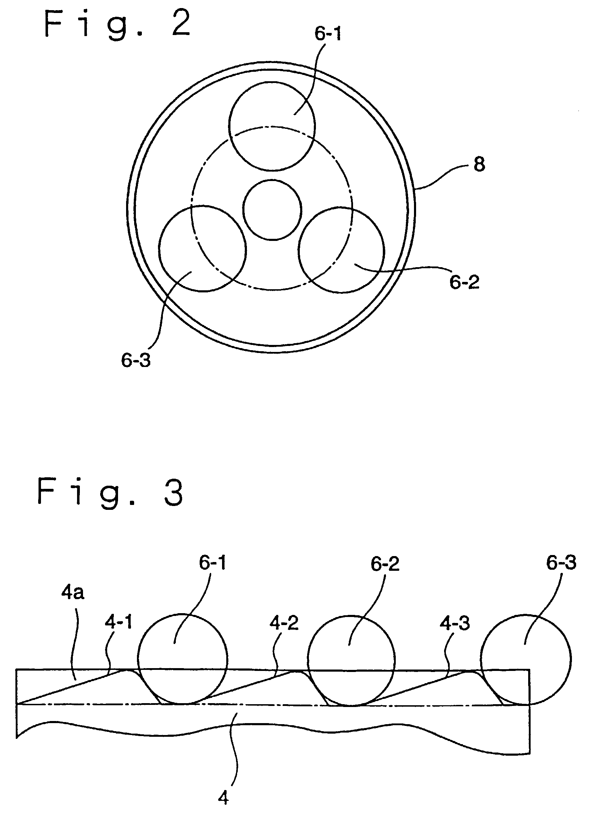

Figure 2 shows a positional relationship among the three balls 6-1, 6-2 and 6-3 defined by the ball retainer 8. As shown in this figure, the three balls 6-1, 6-2 and 6-3 are held at equiangular positions of 120 degrees, and at the same time, they are held in a manner rotatably on their centers.

Figure 3 shows a sectional shape of the ball rolling surface 4a formed on the circular plate 4, on which the balls 6-1, 6-2 and 6-3 are rolled, along the circumferential direction thereof when it is expanded linearly. As shown in this figure, the boll rolling surface 4a is formed with the three cam surfaces 4-1, 4-2 and 4-3 of the same pattern. The respective cam surfaces has a triangular sectional profile projecting in the direction of the axis line L. When relative rotation occurs between the balls and the cam surfaces, the balls move reciprocally along the direction of the axis line L while rolling on the cam surfaces. In this example, one rotation of the rotary input shaft 2 makes each of the balls to ride over the three cam surfaces, so that the balls reciprocate three times. In other words, as the rotary input shaft 2 rotates by one third, the respective balls are caused to perform a single reciprocal motion in the direction of the axis line L.

In the conversion device of the example as constituted above, when the rotary input shaft 2 is rotated via the reduction device 10 by a motor (not shown), the ball retainer 8 for retaining the balls 6-1, 6-2 and 6-3 is also rotated in response thereto. The balls rotate around the axis line L together with the ball retainer 8 while they are held 120 degrees of angular distance between the adjacent ones as mentioned above. Since each of the balls rolls on the cam surfaces formed on the ball rolling surface 4a of the circular plate 4 that is placed at a fixed position, it repeats a reciprocal motion in the direction of axis line L at a stroke corresponding to the height of the cam surfaces. The thus reciprocating balls 6-1, 6-2, 6-3 cause the linear motion shaft 3 to move in the direction of the axis line L. As a result, the operating rod 3c of the linear motion shaft 3 which projects from the tip of the device housing moves reciprocally and nearly.

### (Other modes of the Invention)

In the above example, three cam surfaces are formed, in response to which the number of the balls is three. The number of cam surfaces, however, may be two, or four or more, while the number of balls may be one corresponding to that of the cam surfaces. Further, the cam profile shall not be limited to that of the above example. Furthermore, although the ball retainer is rotated together with the input shaft in the above example, it is possible to constitute such that the ball retainer is fixed and the circular plate having the ball rolling surface that is formed with the cam surfaces is rotated integrally with the rotary input shaft.

### Industrial Applicability

As mentioned above, in the conversion device for converting a rotary motion into a linear motion according to this invention, a plurality of balls arranged on the same circle around the axis line and a plurality of cam surfaces formed circumferentially on the ball rolling surface are used to convert a rotary motion into a linear motion. Accordingly, the rotary input shaft needs to be rotated only in one direction to cause the linear motion shaft to perform a reciprocal linear motion. Further, by increasing or decreasing the number of cam surfaces, the number of times the linear motion shaft moves reciprocally per one rotation of the rotary input shaft can be adjusted. Furthermore, it becomes unnecessary to provide a rotation-preventing mechanism that are required for a conversion mechanism comprising a screw and a nut. Since the linear shaft is applied with a preload by the coil spring, a dead band thereof can be made small. In addition, the size of the device can be reduced compared with a conversion mechanism comprising a screw and a nut.

## Claims

1. A conversion device for converting a rotary motion into a linear motion characterized in that: it comprises a rotary shaft; a linear motion shaft capable of being moved reciprocally and linearly and arranged coaxially with the rotary shaft; a circular plate arranged concentrically with the rotary shaft; a ball rolling surface formed on a surface of the circular plate; a ball pressing surface formed on the linear motion shaft so as to face the ball pressing surface; a plurality of balls arranged between the ball rolling surface and the ball pressing surface; a spring member for pressing the ball pressing surface of the linear motion shaft toward the balls; a ball retainer for retaining the respective balls in place along a circumferential direction, wherein the ball rolling surface has a plurality of cam surfaces arranged concentrically along a circumferential direction, the respective balls are held rotatably at a position corresponding to the respective cam surfaces by means of the ball retainer, and one of the circular plate and the ball retainer retaining the balls is rotated integrally with the rotary shaft.

2. A conversion device for converting a rotary motion into a linear motion as set forth in claim 1, wherein the ball rolling surface is formed with at least three cam surfaces of the same pattern at equiangular positions, and at least three balls are arranged at equiangular positions in a manner that they can roll freely by means of the ball retainer which rotates integrally with the rotary shaft.
